(19) Europäisches Patentamt / European Patent Office / Office européen des brevets

(11) **EP 4 496 670 B1**

(12) **FASCICULE DE BREVET EUROPEEN**

(45) Date de publication et mention
de la délivrance du brevet:
**06.05.2026 Bulletin 2026/19**

(21) Numéro de dépôt: **23716643.4**

(22) Date de dépôt: **20.03.2023**

(51) Classification Internationale des Brevets (IPC):
**B21H 8/00** *(2006.01)* **B23P 9/02** *(2006.01)*
**B23P 15/00** *(2006.01)* **B62D 25/20** *(2006.01)*
**E04F 15/02** *(2006.01)* **E04F 15/06** *(2006.01)*
**B21B 1/22** *(2006.01)*

(52) Classification Coopérative des Brevets (CPC):
**B21H 8/005; B23P 15/00; B62D 25/2054;**
**B62D 33/048;** E04F 15/02161; E04F 15/02172;
E04F 15/02183; E04F 15/06

(86) Numéro de dépôt international:
**PCT/FR2023/050390**

(87) Numéro de publication internationale:
**WO 2023/180663 (28.09.2023 Gazette 2023/39)**

(54) **TÔLE METALLIQUE À RELIEF PERFORMANTE EN PRÉSENCE DE GIVRE**

PROFILIERTE METALLPLATTE MIT GUTER LEISTUNG UNTER EISIGEN BEDINGUNGEN

PROFILED METAL PLATE WITH GOOD PERFORMANCE IN ICY CONDITIONS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **23.03.2022 FR 2202578**

(43) Date de publication de la demande:
**29.01.2025 Bulletin 2025/05**

(73) Titulaire: **Constellium Issoire**
**63500 Issoire (FR)**

(72) Inventeurs:
• **BONNET-DULOUTRE, Marie**
**38700 Sarcenas (FR)**
• **CHABRIOL, Christophe**
**38260 Champier (FR)**
• **GONON, Alain**
**38600 Fontaine (FR)**
• **LORENZINO, Pablo**
**38500 Saint Cassien (FR)**
• **BERNES, Romain-Fabrice**
**63500 Issoire (FR)**
• **THOMAS, Mikaël**
**38850 Charavines (FR)**

(74) Mandataire: **Constellium - Propriété Industrielle**
**C-TEC Constellium Technology Center**
**Propriété Industrielle**
**Parc Economique Centr'Alp**
**725, rue Aristide Bergès**
**CS10027**
**38341 Voreppe (FR)**

(56) Documents cités:
EP-A1- 2 316 590        EP-B1- 0 438 031
EP-B1- 2 552 612        AT-A4- 512 773
DE-U1- 9 409 026        JP-A- H01 275 036
US-B2- 11 198 163

**EP 4 496 670 B1**

## Description

### Domaine technique

L'invention concerne une tôle métallique présentant sur une de ses faces une pluralité de motifs en relief disposés de façon périodique, chaque motif étant lui-même constitué d'une ou plusieurs parties saillantes, que nous appellerons « reliefs ». Cette tôle est destinée à la réalisation de planchers, en particulier des planchers de véhicules industriels. La présente invention concerne plus particulièrement les tôles pour planchers de véhicules frigorifiques. Les tôles métalliques permettent de réaliser des planchers moins glissants et plus résistants à l'usure que les planchers réalisés à partir de matière plastique.

### Art antérieur

Il existe déjà sur le marché de nombreux modèles de tôles à motifs répétitifs en relief. Ces motifs sont par exemple décrits dans la norme NF-EN-1386 et sont souvent désignés de manière imagée (damier, grain d'orge, amande, diamant, grain de riz, damier 2, damier 5, ...). Le motif "damier 5", également appelé "quintet", fréquemment utilisé pour réaliser les tôles de planchers industriels, présente un groupe de 5 bosses allongées, de forme demi-ovoïde, parallèles entre elles qui est entouré de quatre groupes identiques entre eux et déduits du premier groupe par une rotation de 90°. Les tôles qui présentent ce motif "quintet" résistent très bien à l'usure mais ont des qualités anti-dérapantes moyennes. Le motif "grain de riz", décrit dans le brevet FR 2 747 948, est également utilisé pour la réalisation de tôles en alliage d'aluminium pour planchers industriels, qui présentent des propriétés d'emploi satisfaisantes, notamment parce qu'elles possèdent une bonne résistance à l'usure et offrent des conditions de contact frottant qui permettent aux piétons de déambuler sans risque de chute par glissade et aux chariots de rouler sans déraper.

En plus des propriétés de résistance à l'usure et de conditions favorables de contact frottant, il est également souhaitable de diminuer le bruit généré par des engins roulants, tels que les chariots, qui doivent circuler sur les planchers munis de telles tôles, en particulier les planchers de camions frigorifiques.

Dans la pratique, la tôle divulguée par FR 2 747 948, qui présente un ensemble de motifs en relief en forme de grain de riz, s'avère moins bruyante que certaines tôles concurrentes également employées pour la réalisation de planchers de camions frigorifiques, en particulier les tôles "quintet" évoquées ci-dessus, qui s'avèrent très bruyantes.

Toutefois, la tôle aux motifs "grain de riz" de FR 2 747 948 ne semblant pas encore entièrement satisfaisante dans la mesure où le niveau de bruit atteint est un peu trop élevé en raison des exigences, d'autres solutions ont été proposées.

La demande EP 2 316 590 A1 décrit une tôle gravée avec un motif répétitif ayant une pluralité d'unités de motif. Chaque unité de motif comprend un ou plusieurs reliefs allongés surélevés, un relief allongé ayant une longueur le long d'un grand axe et une largeur inférieure à la longueur le long d'un petit axe perpendiculaire au grand axe. Les unités de motif comprennent des premières unités de motif (PU1) ayant des premiers reliefs allongés (R1) ayant le grand axe parallèle à une première direction (D1), et des secondes unités de motif (PU2) ayant des seconds reliefs allongés (R2) ayant le grand axe parallèle à une seconde direction (D2) orientée transversalement à la première direction, dans laquelle une première unité de motif est entourée par un nombre pair de secondes unités de motif identiques. Un angle entre la première direction (D1) et la deuxième direction (D2) est compris entre 50° et 75°.

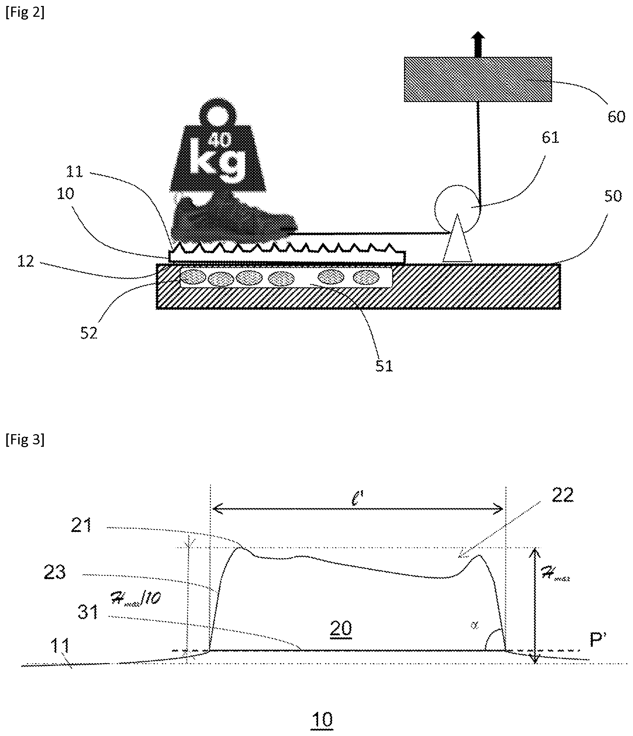

Le brevet EP 2 552 612 B1, sur lequel le préambule de la revendication 1 se base, concerne une tôle pour la réalisation de planchers, notamment de véhicules industriels, sur lesquels doivent circuler des camions, présentant une pluralité de motifs, la hauteur maximale desdits reliefs étant comprise entre 0,2 et 1,5 mm, lesdits reliefs présentant une surface de friction qui présente une largeur moyenne d'au moins 1 mm, dans laquelle lesdits reliefs sont disposés en plusieurs groupes alignés de reliefs tous de même forme, de même orientation, et avec leurs centres de gravité sensiblement alignés dans une même direction donnée (D), la distance minimale, mesurée dans ladite direction (D), entre deux reliefs adjacents d'un même groupe aligné étant inférieure à 6 mm. La Figure 3B et le paragraphe [0034] illustrent la difficulté de parvenir à ce que la forme du relief corresponde étroitement au négatif de la forme du motif gravé dans le cylindre.

Le modèle d'utilité DE 9409026 U1 concerne une tôle d'acier inoxydable en particulier pour plancher de véhicules et chambres frigorifiques pourvu d'une structuration de surface composée de picots distincts dont la hauteur est sensiblement comprise entre 0,5 et 2 mm obtenus par emboutissage d'une tôle de 0.8 mm d'épaisseur.

Le brevet EP0438031 B1 concerne un procédé d'usinage de surfaces consistant à créer des empreintes dans la surface au moyen d'un ou plusieurs galets moletés, les surfaces avant moletage ayant été rendues rugueuses par meulage ou brossage.

La demande de brevet JPH01275036 concerne l'amélioration de l'adhérence de résines sur des feuille minces d'aluminium en obtenant une rugosité Rmax de 8 à 18 $\mu$m.

Le brevet US11198163 concerne un procédé comprenant un gaufrage très superficiel à une échelle micrométrique associé à un laminage superficiel, qui implique une légère réduction d'épaisseur, le procédé s'appliquant à des plaques de quelques millimètres d'épaisseur et à des tôles d'aluminium d'épaisseur inférieure à 0,3 mm, fournies, dans les deux cas , en plaques indépendantes ou en bobines.

La demande de brevet AT512773A4 concerne un procédé de production d'une feuille d'aluminium avec des éléments de sécurité intégrés. Une feuille d'aluminium est laminée jusqu'à une épaisseur inférieure à 150 µm en plusieurs passes de laminage à froid, une texturation s'étendant dans le sens du laminage étant induite simultanément sur les deux faces de la feuille. Lors d'une dernière passe de laminage à froid, la feuille est acheminée vers une paire de rouleaux de travail, dans laquelle, sur au moins une surface de rouleau, la structuration de surface en relief générée dans la direction de laminage par meulage a été réduite sur la base du contraste et du motif dans une région de 10 à 50 % par rapport à la rugosité de surface moyenne pour former un motif pour un élément de sécurité qui est transféré sur le côté de surface de la feuille faisant face à la surface du rouleau. La feuille d'aluminium générée a un aspect brillant sur les deux faces de sorte que le signe de sécurité ressort clairement en raison de son aspect terne.

La résistance au glissement est particulièrement délicate pour les camions frigorifiques car lorsque les portes sont ouvertes, l'humidité contenue dans l'air extérieur plus chaud vient se condenser sur la surface froide du plancher qui peut se recouvrir d'une fine couche de givre.

Les présents inventeurs ont cherché à améliorer la résistance au glissement, c'est-à-dire d'augmenter l'effort de frottement, dans les conditions spécifiques des camions frigorifiques, tout en conservant les exigences de résistance au glissement à température ambiante, de résistance à l'usure et de faible niveau de bruit.

**Exposé de l'invention**

Un premier objet de l'invention est une tôle métallique en alliage d'aluminium pour la réalisation de planchers, en particulier de véhicules industriels, sur lesquels doivent circuler des chariots, ladite tôle présentant sur une face une pluralité de motifs, chaque motif comprenant une ou plusieurs parties saillantes, appelées "reliefs", lesdits motifs étant disposés de façon périodique, discrète et ordonnée, la hauteur maximale (Hmax) desdits reliefs étant comprise entre 0,2 et 1,5 mm, lesdits reliefs présentant une surface, dite "frottante", qui est définie par l'intersection d'un relief avec un plan (P) parallèle à une face de la tôle et situé à mi-distance du sommet dudit relief et qui présente, quelle que soit la direction selon laquelle elle est mesurée, une largeur moyenne au moins égale à 0,2 mm, la tôle comprenant au moins 18000 reliefs par mètre carré, lesdits reliefs étant disposés en une pluralité de groupements alignés, c'est-à-dire une pluralité de groupements de reliefs dans lesquels les reliefs de chacun desdits groupements alignés présentent la même forme, la même orientation et ont leurs centres de gravité sensiblement alignés selon une même direction donnée (D), caractérisée en ce que la distance minimale mesurée suivant ladite direction donnée (D) entre deux reliefs voisins d'un même groupement aligné est toujours inférieure à 10 mm, lesdits groupements alignés étant disposés de telle sorte que la distance minimale selon la direction perpendiculaire à la dite direction donnée (D) entre deux reliefs voisins de deux groupements alignés différents est inférieure à 15 mm, et dans laquelle les parois des reliefs font un angle avec la face (11) de la tôle supérieur à 45°.

Un autre objet de l'invention est un procédé de fabrication d'une tôle selon l'invention comprenant, successivement,

- l'élaboration d'un bain de métal liquide,
- la coulée dudit alliage typiquement sous forme de plaque de laminage,
- optionnellement l'homogénéisation du produit ainsi coulé,
- la déformation par laminage à chaud et optionnellement à froid du produit ainsi obtenu de façon à obtenir une tôle,
- la réalisation sur une face de la tôle d'une pluralité de motifs, chaque motif comprenant une ou plusieurs parties saillantes, appelées "reliefs", par usinage chimique ou par usinage électrochimique ou par usinage mécanique ou par laminage avec un cylindre gravé.

Encore un autre objet de l'invention est l'utilisation d'une tôle selon l'invention pour réaliser un plancher de véhicule frigorifique.

**Figures**

La figure 1a montre la coupe d'un relief et illustre la surface frottante.
La figure 1b illustre le principe de calcul d'une largeur moyenne mesurée dans une direction donnée (D1)
La figure 1c illustre deux reliefs voisins alignés de même forme et de même orientation, dont les centres de gravité sont alignés selon la direction D1
La figure 2 montre le dispositif de mesure de frottement à froid.

La figure 3 montre la coupe d'un relief et illustre la surface de base.

La figure 4 illustre un des motifs de type grain de riz selon l'art antérieur.

La figure 5 illustre un des motifs selon l'art antérieur.

La figure 6 illustre des motifs selon l'invention décrits dans l'exemple 1.

La figure 7 illustre des motifs selon l'invention décrits dans l'exemple 3.

La figure 8 illustre des motifs selon l'invention décrits dans l'exemple 3.

La figure 9 montre un cylindre gravé utilisé pour la réalisation des tôles de l'exemple 3.

La figure 10 montre un cylindre gravé utilisé pour la réalisation des tôles de l'exemple 3.

**Description détaillée de l'invention**

La désignation des alliages se fait en conformité avec les règlements de The Aluminium Association, connus de l'homme du métier. Les définitions des états métallurgiques sont indiquées dans la norme européenne EN 515 - 2017. Sauf mention contraire les définitions de la norme NF EN 1386 - 2007 intitulée « Tôles relief » s'appliquent.

Les caractéristiques mécaniques statiques en traction, en d'autres termes la résistance à la rupture $R_m$, la limite d'élasticité conventionnelle à 0,2% d'allongement $R_{p0,2}$, et l'allongement à la rupture A%, sont déterminés par un essai de traction selon la norme NF EN ISO 6892-1, le prélèvement et le sens de l'essai étant définis par la norme EN 485-1. Les essais de traction à chaud sont réalisés selon la norme NF EN 10002-5. La dureté Vickers est mesurée selon la norme ISO 6507-1. Sauf mention contraire, les définitions de la norme EN 12258 s'appliquent.

La tôle selon l'invention est une tôle métallique à reliefs destinée à être posée sur le plancher d'un véhicule. Selon la définition de la norme EN12258, une tôle est un produit laminé de section transversale globalement rectangulaire dont l'épaisseur moyenne est au moins de 0,20 mm et n'excède pas 1/10ème de la largeur. Le terme "tôle métallique à reliefs" employé ici couvre autant les tôles dites "gravées" que les "tôles reliefs" telles que définies dans la norme EN12258. Le terme "tôle gravée" est un terme général où les motifs peuvent être imprimés en creux ou en relief sur une ou sur les deux faces, ce qui implique autant l'impression, la gravure, l'embossage, voire l'usinage de tels motifs sur une tôle à section transversale parfaitement rectangulaire que le laminage avec passe finale sur cylindre gravé, procédé associé au terme "tôle relief", lequel fait référence à une tôle "imprimée d'un motif en relief sur une face, par laminage".

La tôle selon l'invention présente sur une de ses faces des motifs qui comprennent un ou plusieurs reliefs et qui, telle la maille élémentaire d'un réseau cristallin, se répètent de façon périodique et ordonnée. La face comprenant les reliefs est destinée à être la face supérieure lors de son utilisation, c'est-à-dire la face en contact notamment avec les chaussures ou les chariots. Un motif est donc un morceau de tôle qui se répète indéfiniment par translation suivant deux directions du plan de la tôle. Ce morceau de tôle peut ne comprendre qu'un relief mais il peut aussi comprendre plusieurs reliefs qui peuvent avoir des formes ou des orientations différentes. Il ne semble pas avantageux d'avoir des reliefs de hauteurs différentes mais cela n'est a priori pas exclu. Pour avoir une résistance à l'usure acceptable dans les conditions pratiques d'utilisation, la hauteur maximale $H_{max}$ de ces reliefs est comprise entre 0,2 et 1,5 mm. Avantageusement, en particulier pour ce qui concerne les tôles à reliefs en alliage d'aluminium, elle est comprise entre 0,2 et 1,0 mm, de préférence entre 0,3 et 0,8 mm, de préférence encore entre 0,4 et 0,6 mm.

Lesdits motifs se répètent aussi de façon discrète, car une telle configuration est favorable à la propriété anti-dérapante du plancher. En effet, les reliefs se comportent comme des indenteurs qui agissent sur la surface de la semelle ou de la bande de roulement de la roue : sous l'effet du poids du piéton ou du chariot, celle-ci se déforme et « s'enfonce » autour du relief sur une certaine hauteur dont l'ordre de grandeur est un, deux ou trois dixièmes de millimètre. Un relief discontinu favorise, dans la semelle ou la bande de roulement, la formation d'un bourrelet tout autour de sa paroi sommitale, ce qui favorise l'«accrochage» de la semelle, de la bande de roulement ou du bandage de la roue sur le plancher. D'autre part, des motifs qui se répètent de façon discrète facilitent le nettoyage du plancher, l'écoulement des fluides et leur évacuation étant plus aisée. La tôle selon l'invention ne doit pas être entièrement constituée de reliefs continus et de préférence la tôle selon l'invention ne présente pas de relief continu.

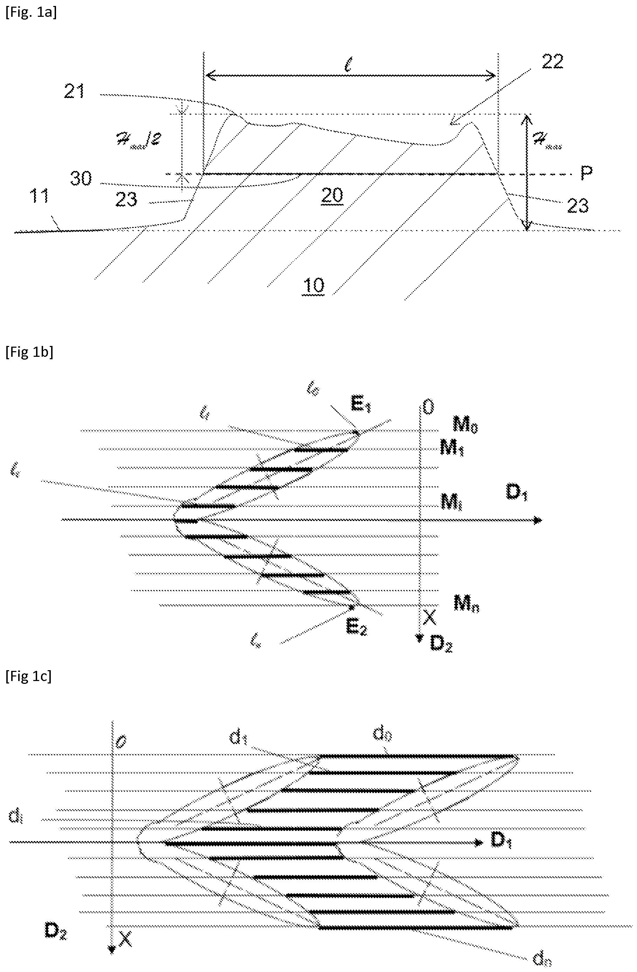

Comme il est difficile de définir la surface réelle de contact entre ces reliefs et les semelles des piétons déambulant et/ou les bandages ou chemins de roulement des roues de chariots qui circulent sur lesdits planchers, nous allons définir conventionnellement une surface corrélée aux propriétés anti-dérapantes du relief de la tôle, que nous appellerons "surface frottante". Ladite surface résulte de l'intersection dudit relief avec un plan parallèle à la face de la tôle, situé à mi-hauteur, c'est-à-dire à mi-distance du sommet du relief. Une telle définition est liée au phénomène décrit plus haut : le relief se comporte comme un indenteur qui agit sur la surface de la semelle ou de la bande de roulement de la roue. La figure 1a illustre comment ladite surface frottante est obtenue : la face (11) de la tôle (10) présente un relief (20) en saillie dont la surface sommitale (22) n'est pas forcément plane et parallèle à la face (11) de la tôle. La surface frottante (30) est définie comme étant l'intersection du relief (20) avec un plan (P) parallèle à la face (11) de la tôle et distant de $H_{max}$/2 du sommet (21) du relief (20), la hauteur maximale $H_{max}$ étant la distance entre ledit sommet et la face (11) de la tôle. Les parois (23) du relief sont représentées sur la figure 1a.

Sur la figure 1a, la surface frottante s'étend sur une largeur $\ell$. La demanderesse a remarqué qu'il était nécessaire

que cette largeur $\ell$ atteigne en moyenne une valeur suffisante pour que le contact se traduise par un effort de frottement efficace : si $\ell$ est trop faible, le matériau de la semelle ou de la bande de roulement se déplace d'un côté ou de l'autre du relief, sans être particulièrement retenu. C'est pourquoi la demanderesse a défini un critère selon lequel, quelle que soit la direction de balayage, la largeur moyenne du relief doit être au moins égale à 0,2 mm. La figure 1b illustre le principe de calcul d'une largeur moyenne mesurée dans une direction donnée ($D_1$) : le long de la direction ($D_2$) perpendiculaire à la direction ($D_1$), on définit les extrémités E1 et E2 du relief, dont les coordonnées sont respectivement 0 et X sur l'axe ($D_2$) et on trace n fois entre lesdites extrémités une droite Mi (i=1 à n) parallèle à la direction ($D_1$), qui coupe la surface frottante sur une longueur li. La largeur moyenne du relief, relative à la direction (D1), est donnée par : $\bar{l} = \lim_{n \to \infty} \dfrac{\sum_0^n l_i}{n}$ . Elle peut bien évidemment être approchée par une moyenne effectuée sur N mesures ( $\dfrac{\sum_0^N l_i}{N}$ ), N étant un entier plus ou moins grand, selon la complexité de la forme de la surface frottante. De préférence, pour améliorer la propriété anti-dérapante de la tôle, la largeur moyenne de la surface frottante dans la direction (D) est au moins 0,5 mm, voire au moins à 0,7 mm mais de préférence au plus 5 mm et de préférence au plus 3 mm. Dans un mode de réalisation de l'invention la largeur moyenne de la surface frottante est au plus de 1,5 mm dans la direction (D). On définit par ailleurs la largeur maximale de la surface frottante qui correspond à la largeur la plus élevée de la surface frottante quelle que soit la direction dans laquelle elle est mesurée.

Les tôles selon l'invention ont des reliefs disposés en une pluralité de groupements alignés, c'est-à-dire en une pluralité de groupements de reliefs au sein desquels chaque relief présente une même forme, une même orientation et un centre de gravité qui se trouve sensiblement sur une droite parallèle à une direction donnée (D), la distance minimale mesurée suivant ladite direction (D) entre deux reliefs voisins d'un même groupement aligné étant toujours inférieure à 10 mm, de préférence inférieure à 6 mm et de manière préférée inférieure à 4 mm. Pour caractériser la forme, l'orientation et le centre de gravité d'un relief, ainsi que la distance minimale entre deux reliefs, on peut se référer à nouveau à la surface frottante telle que définie précédemment et illustrée en figure 1a. La figure 1c illustre deux reliefs voisins alignés de même forme et de même orientation, dont les centres de gravité sont alignés selon la direction $D_1$. Elle illustre le principe de calcul d'une distance minimale mesurée dans une direction donnée ($D_1$): le long de la direction ($D_2$) perpendiculaire à la direction ($D_1$), on définit les projections E1 et E2 des extrémités des reliefs, dont les coordonnées sont respectivement 0 et X sur l'axe ($D_2$) et on trace entre lesdites extrémités n fois une droite Mi (i=1, n) parallèle à la direction ($D_1$). La droite Mi traverse les surfaces frottantes des reliefs, créant des intervalles de longueur di entre deux surfaces frottantes. La distance minimale entre reliefs voisins entre donnée par :

$$\lim_{n \to \infty} Min(d\mathrm{i}, i = 1, n)$$

Bien évidemment, cette valeur peut être approchée par un calcul effectué sur N mesures (*Min*($d_i$ i=1, N)), N étant un entier plus ou moins grand, selon la complexité de la forme de la surface frottante du relief relatif au groupement aligné. Cette distance minimale est toujours inférieure à 10 mm, en ce sens que lesdits reliefs d'un même groupement aligné peuvent être répartis non uniformément et que la distance minimale selon la direction (D) entre deux reliefs voisins, si elle peut varier selon les reliefs choisis, ne dépasse jamais 10 mm. Les motifs sont de préférence alignés sur une même droite de direction (D). Bien évidemment, la notion de groupement aligné englobe aussi les configurations de reliefs de même forme, de même orientation et dont les centres de gravité sont sensiblement alignés, c'est-à-dire très proches d'une même droite de direction (D), typiquement distants d'1 mm au plus d'une telle droite. Avantageusement, la direction donnée (D) d'alignement des reliefs des groupements alignés est sensiblement parallèle à la direction globale ($D_c$) de circulation des chariots sur lesdites tôles. De préférence, la direction de laminage et la direction globale ($D_c$) de circulation des chariots sont confondues. La demanderesse a en effet constaté que les tôles les plus silencieuses étaient celles qui présentaient des groupements alignés selon une direction voisine de la direction globale de circulation des chariots, présentant des reliefs de même forme, de même orientation et proches les uns des autres, avec une distance minimale mesurée selon la direction globale de circulation des chariots, inférieure à 10mm, de préférence inférieure à 6 mm. De préférence la tôle selon l'invention n'a qu'une seule forme de relief, qu'une seule orientation de relief par groupement aligné, deux reliefs voisins n'étant pas trop éloignés l'un de l'autre, la distance maximale typique étant donnée par la distance minimale selon (D) entre les surfaces sommitales frottantes de deux reliefs alignés voisins qui doit être inférieure à 10 mm, de préférence 6 mm. Ceci n'interdit pas la possibilité de faire voisiner deux groupements alignés de reliefs de forme et/ou d'orientation différentes, à condition toutefois que les lignes rejoignant leurs centres de gravité respectifs ne soient pas trop proches l'une de l'autre, c'est-à-dire soient typiquement distantes d'au moins un millimètre l'une de l'autre.

Les tôles présentent des groupements alignés disposés de telle sorte que la distance minimale, selon la direction perpendiculaire à la direction donnée (D), entre deux reliefs voisins de deux groupements alignés différents est inférieure à 15 mm, préférentiellement inférieure à 8 mm, de manière préférée inférieure à 6 mm. Dans un mode de réalisation de l'invention, la distance minimale, selon la direction perpendiculaire à la direction donnée (D), entre deux reliefs est au moins 0,8 mm, de préférence au moins 1 mm. Dans un mode de réalisation de l'invention, la distance minimale, selon la direction perpendiculaire à la direction donnée (D), entre deux reliefs est au moins 2 mm, de préférence au moins 3 mm.

Les présents inventeurs ont constaté que de manière surprenante, il est possible d'augmenter significativement l'effort de frottement à basse température, tout en conservant les exigences de résistance au glissement à température ambiante, de résistance à l'usure et de faible niveau de bruit la densité de motif des tôles relief connues. Un critère essentiel pour améliorer la résistance au frottement à basse température est la densité des reliefs.

Ainsi la tôle selon l'invention présente au moins 18000 reliefs par mètre carré, de préférence au moins 20000 reliefs par mètre carré, de manière préférée au moins 25000 reliefs par mètre carré préférentiellement au moins 30000 reliefs par mètre carré et de manière préférée au moins 35000 reliefs par mètre carré.

Les présents inventeurs ont constaté que lorsque le nombre de reliefs au mètre carré est inférieur à 18000, l'effort de frottement à froid est significativement réduit ce qui peut entrainer un glissement trop important sur des tôles dans des conditions de camion frigorifique.

Les présents inventeurs ont de plus constaté qu'il est avantageux que les reliefs nombreux soient de petites dimension et pointus, à l'image d'un tapis de fakir. Comme illustré par la figure 3, les parois (23) des reliefs sont très pentues, faisant un angle avec la face (11) de la tôle supérieur à 45°, de préférence supérieur à 60° et préférentiellement supérieur à 70°.

Avantageusement, la largeur maximale de la surface frottante des reliefs est inférieure à 10 mm et de préférence inférieure à 8 mm quelle que soit la direction selon laquelle elle est mesurée. De même avantageusement la largeur moyenne de la surface « frottante » des reliefs est au plus de de 5 mm, de préférence au plus de 4 mm et de manière préférée au plus de 3 mm quelle que soit la direction selon laquelle elle est mesurée. Préférentiellement, la tôle selon l'invention présente une surface (31), dite "de la base", illustrée par la Figure 3, qui est définie par l'intersection d'un relief avec un plan (P') parallèle à une face de la tôle et situé à 10% de la hauteur du sommet (21), dont la superficie est comprise entre la superficie de la surface frottante et la superficie de la surface frottante plus 10% et de préférence entre la superficie de la surface frottante et la superficie de la surface frottante plus 5%. Ainsi la surface de base étant proche de la surface frottante, les reliefs sont fortement saillants. Dans un mode de réalisation avantageux la superficie de la surface frottante d'un relief est inférieure à 20 mm$^2$ et de préférence inférieure à 15 mm$^2$. La Figure 3 illustre par ailleurs l'angle $\alpha$ entre les parois (23) des reliefs et la face (11) : il est déterminé à l'intersection du relief avec le plan (P') parallèle à la face (11) de la tôle et situé à 10% de la hauteur du sommet (21).

Les reliefs peuvent être de diverses formes telles que circulaire, ellipsoïdale, ovale, demi-ovoïde, parallélogramme dont notamment losange ou carrée, avec éventuellement des angles arrondis, trapézoïdale, triangle, étoile ou des combinaisons de ces formes telle qu'un rectangle ayant des petit côtés arrondis. Dans un mode de réalisation avantageux les reliefs ont la forme de parallélogrammes dont les angles sont vifs, typiquement les angles des reliefs ne sont pas arrondis et correspondent à l'intersection de segments de droite., de manière préférée les reliefs ont la forme de carrés, ces formes pouvant notamment être obtenus à l'aide d'un procédé selon l'invention dans lequel la réalisation d'une pluralité de motifs est effectuée par deux passes successives de laminage avec des cylindres gravés rainurés.

De préférence la tôle selon l'invention est en un alliage appartenant au groupe regroupant les alliages d'aluminium des séries 3xxx, 5xxx et 6xxx selon la désignation de l'Aluminum Association ainsi que les alliages de la série 7xxx, comprenant moins de 0,4% Cu. Un exemple d'alliage 3xxx utilisable est l'alliage 3104. Un exemple d'alliage 5xxx utilisable est l'alliage 5086. Un exemple d'alliage 6xxx utilisable est l'alliage 6061. Un exemple d'alliage 7xxx utilisable est l'alliage 7020. L'invention est avantageusement particulièrement adaptée pour des tôles en alliage d'aluminium dont la dureté est élevée, telles que des tôles dont la dureté Vickers est au moins 60 HV, de préférence au moins 70 HV, préférentiellement au moins 80 HV, de manière plus préférée au moins 90 HV et de manière encore plus préférée au moins 100 HV.

Dans un mode de réalisation de l'invention, la seconde face de la tôle (12), c'est-à-dire la face qui ne comporte pas de motifs, illustrée sur la Figure 2, présente une surface rugueuse dont la rugosité $R_{max}$ est comprise entre 10 $\mu$m et 250 $\mu$m. Ce mode de réalisation est notamment avantageux quand cette face est destinée à être collée sur un support. La rugosité $R_{max}$ de ladite surface rugueuse est de préférence comprise entre 50 $\mu$m et 150 $\mu$m et préférentiellement entre 100 $\mu$m et 140 $\mu$m. La rugosité de la surface rugueuse est typiquement obtenue par fraisage électrochimique, fraisage mécanique, brossage, ou par déformation typiquement sablage, grenaillage, laminage, embossage, gaufrage, de préférence par laminage. La rugosité de la seconde face peut être obtenue par une texture se répétant de façon périodique et ordonnée, de préférence réalisée par laminage.

Les tôles selon l'invention sont préparées par un procédé comprenant, successivement,

- l'élaboration d'un bain de métal liquide,

- la coulée dudit alliage typiquement sous forme de plaque de laminage,
- optionnellement l'homogénéisation du produit ainsi coulé,
- la déformation par laminage à chaud et optionnellement à froid du produit ainsi obtenu de façon à obtenir une tôle,
- la réalisation sur une face de la tôle d'une pluralité de motifs, chaque motif comprenant une ou plusieurs parties saillantes (20), appelées "reliefs ", par usinage chimique ou par usinage électrochimique ou par usinage mécanique ou par laminage avec au moins un cylindre gravé.

L'étape de réalisation des motifs doit notamment permettre d'obtenir les caractéristiques de densité et géométriques avantageuses. Les procédés d'usinage permettent de réaliser des reliefs avec la géométrie précise souhaitée. Cependant ces procédés sont couteux pour la réalisation de grandes surfaces et il est avantageux de réaliser la pluralité de motifs par laminage à l'aide de cylindre gravés. La réalisation des motifs selon l'invention peut cependant s'avérer délicate avec un cylindre gravé. En effet, les motifs sont nombreux et fins, avantageusement leurs parois sont orientées verticalement par rapport à la surface de la tôle avec un angle élevé, ce qui peut rendre délicate la gravure du cylindre car la fraction de surface gravée en creux sur le cylindre est faible et le relief est fin. De plus la force de laminage nécessaire est dans ce cas très élevée. Les inventeurs ont trouvé que de façon avantageuse la réalisation d'une pluralité de motifs selon l'invention peut être effectuée par au moins deux passes successives de laminage avec des cylindres gravés rainurés identiques ou différents.

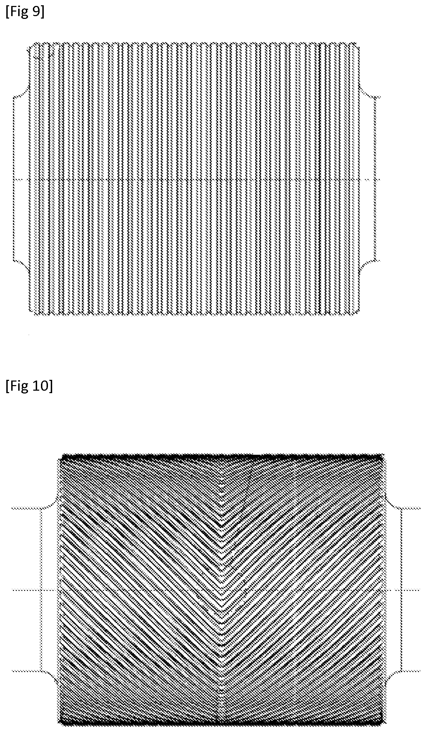

Les cylindres gravés rainurés utilisés sont des cylindres ne comportant que des lignes continues obtenues par fraisage. Ces cylindres sont plus économiques à réaliser que des cylindres comportant de multiples petites cavités. Un exemple de cylindre pouvant être utilisé est un cylindre cannelé présentant des rainures permettant de créer des créneaux parallèles à la direction de laminage. Ce type de cylindre est illustré par la Figure 9. Un autre exemple de cylindre pouvant être utilisé est un cylindre chevron présentant des rainures en chevron permettant de créer des créneaux présentant un angle avec à la direction de laminage, un angle compris entre 30° et 60 °, préférentiellement entre 40° et 50°, typiquement de l'ordre de 45° étant avantageux. Ce type de cylindre est illustré par la Figure 10. Divers types de chevrons peuvent être utilisés, typiquement avec des motifs en « V » ou en « W », se répétant avec une fréquence plus ou moins élevée dans la largeur du cylindre. Encore un autre exemple de cylindre pouvant être utilisé est un cylindre à rainures inclinées présentant des rainures permettant de créer des créneaux présentant un angle identique avec à la direction de laminage dans toute la largeur, un angle compris entre 30° et 60 °, préférentiellement entre 40° et 50°, typiquement de l'ordre de 45° étant avantageux, de dernier type de cylindre étant cependant plus délicat à utiliser en raison de l'asymétrie des forces lors du laminage. Grâce aux passes successives de laminage avec les cylindres rainurés, les motifs sont réalisés en plusieurs temps afin de séparer le marquage longitudinal du marquage transversal, par un laminage successif avec des cylindres rainurés de façon différente. Avantageusement on réalise deux passes successives.

Plusieurs combinaisons sont possibles suivant l'ordre d'utilisation des cylindres afin d'obtenir différents motifs. Quelques modes de réalisation préférés sont décrits ci-après.

Dans un mode de réalisation, la tôle est laminée avec le cylindre cannelé puis avec le cylindre chevron. Dans un autre mode de réalisation, la tôle est laminée avec le cylindre chevron puis avec le cylindre cannelé. Dans encore un autre mode de réalisation, la tôle est laminée avec le cylindre chevron puis à nouveau avec le cylindre chevron après avoir retourné la tôle de 180°. Dans ce cas la fin du laminage de la première passe avec le cylindre chevron correspondra au début du laminage de la seconde passe avec le cylindre chevron. Dans encore un autre mode de réalisation, la tôle est laminée avec le cylindre chevron puis à nouveau avec un cylindre chevron symétrique au premier par rapport à un plan vertical. Dans un mode de réalisation les deux passes sont réalisées successivement sur un laminoir ne comportant qu'une seule cage, de type duo ou quarto, préférentiellement de type de duo. Dans un autre mode de réalisation les passes successives sont réalisées sur un laminoir tandem, c'est-à-dire comportant au moins deux cages de laminoir, les cages étant équipées de cylindres présentant un rainurage différent de façon à créer la rugosité souhaitée.

Un autre objet selon l'invention concerne l'utilisation d'une tôle selon l'invention pour réaliser des planchers, avantageusement des planchers de véhicule frigorifique. Avantageusement la tôle selon l'invention est placée sur le plancher du véhicule de telle sorte que la direction de laminage coïncide avec la longueur du véhicule. En effet, c'est dans la direction de la longueur du véhicule que les chariots circulent le plus fréquemment et qu'ils peuvent atteindre la vitesse la plus élevée.

Ces aspects, ainsi que d'autres de l'invention sont expliqués plus en détail à l'aide des exemples illustratifs et non limitatifs suivants.

**Exemples**

DISPOSITIF DE MESURE DU FROTTEMENT A FROID

La figure 2 illustre schématiquement, en coupe, le dispositif de mesure pour la mesure de frottement à froid. L'échantillon (10) sur lequel les mesures sont effectuées est un morceau de tôle à reliefs de dimensions 200*400 mm. La plus grande dimension correspond à la direction de circulation (Dc). Le porte-échantillon (50) comprend un support plan sur lequel est posé l'échantillon offrant sa face munie de reliefs au passage d'une chaussure de sécurité lestée d'un poids de 40 kg. Un logement (51) est prévu dans le porte échantillon afin d'insérer sous la tôle à reliefs un moyen de refroidissement, typiquement de la carboglace (52). Après avoir approvisionné le logement en carboglace, une tôle provenant d'un congélateur, à la température de - 20 °C, est positionnée sur le porte échantillon. Une quantité d'eau définie est pulvérisée à l'aide d'un brumisateur à la surface de la tôle, formant une couche de givre contrôlée. Quand la température de la tôle atteint une température comprise entre -2 °C et - 10°C on réalise le test de mesure de frottement. Une cellule de mesure de force (60) est reliée à la chaussure par l'intermédiaire d'une poulie (61). La force obtenue est mesurée en Newton (N).

MESURE DU NIVEAU DE BRUIT

Le niveau de bruit a été mesuré sur un banc de mesure semblable à celui décrit dans la demande WO2011/121191. Plutôt qu'une évaluation sonore, on a mesuré un signal vibratoire dans la direction verticale à l'aide de trois accéléromètres. En effet des études de bruits et de vibrations ont permis d'établir une forte corrélation vibration/puissance acoustique, autorisant à mesurer le signal vibratoire des différents types de tôles pour évaluer leur performance sonore. La valeur quadratique moyenne du signal vibratoire dans la direction verticale, désignée si après par RMS-Z est la grandeur retenue, elle est exprimée en g (9,80665 m.s$^{-2}$).

RESISTANCE A L'ABRASION

La résistance à l'abrasion a été mesurée par des essais d'abrasion Taber selon la norme NF EN ISO5470, avec une masse de 500g sur chaque roue.

Afin d'évaluer la perte d'adhérence due à l'usure, des mesures de frottement à froid ont été réalisées après un ou deux passages aller et retour avec une brosse métallique circulaire montée sur une perceuse à colonne ou une fraiseuse d'usinage. La brosse métallique est mise en contact hors rotation avec la tôle à tester puis mise en rotation.

Exemple 1

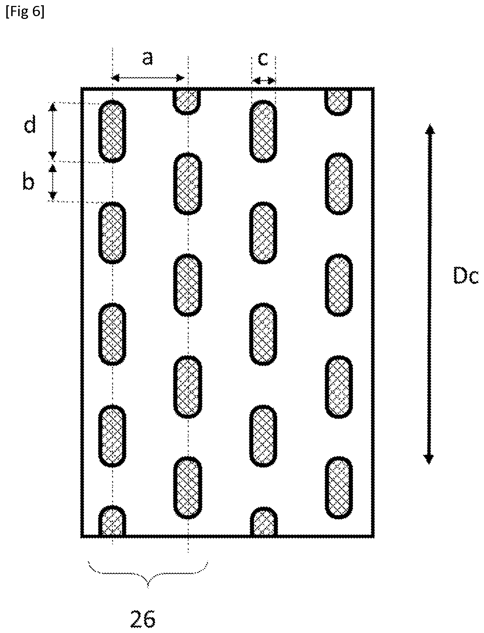

Dans cet exemple, on a préparé par usinage plusieurs tôles en alliage AA5086 dans un état brut de laminage et de dureté 110 HV ne comportant qu'une pluralité de groupements alignés (26) selon la Figure 6. Les parois des reliefs étaient fortement pentues, l'angle avec la tôle étant proche de 90°. Ainsi les caractéristiques des reliefs sont pratiquement identiques quelle que soit la hauteur considérée. Le tableau 1 résume les caractéristiques géométriques a, b, c et d des reliefs. c correspond sensiblement à la largeur moyenne dans la direction perpendiculaire à la direction de roulement Dc. b correspond à la distance minimale mesurée suivant la direction donnée Dc entre deux reliefs voisins d'un même groupement aligné. La résistance au frottement sur tôle gelées a été mesurée selon la méthode décrite.

L'ensemble des tôles ont présenté un résultat acceptable, les meilleurs résultats étant obtenus pour les tôles B et E.

[Tableau 1]

| Tôle | B | C | D | E | F | I | J |
|---|---|---|---|---|---|---|---|
| a (mm) | 2 | 2 | 4 | 2 | 2 | 4 | 7 |
| b (mm) | 2 | 9 | 2 | 2 | 0,8 | 4 | 2 |
| c (mm) | 0,8 | 0,8 | 2 | 0,8 | 0,8 | 0,8 | 2 |
| d (mm) | 3 | 9 | 3 | 3 | 3 | 9 | 3 |
| Hauteur maximale (H$_{max}$) | 0,5 | 0,5 | 0,5 | 0,5 | 0,5 | 0,8 | 0,8 |
| Angle de la dimension principale du relief par avec la direction Dc | 0 | 0 | 0 | +/- 30° | 0 | 0 | 0 |
| Résistance au frottement sur tôle gelées (N) | 280 | 265 | 258 | 280 | 240 | 250 | 258 |
| Nbre reliefs/m² en milliers | 100 | 27, 8 | 50 | 100 | 132 | 19,2 | 28,6 |
| Surface d'un relief (mm2) | 2,4 | 7,2 | 6 | 2,4 | 2,4 | 7,2 | 6 |

Exemple 2

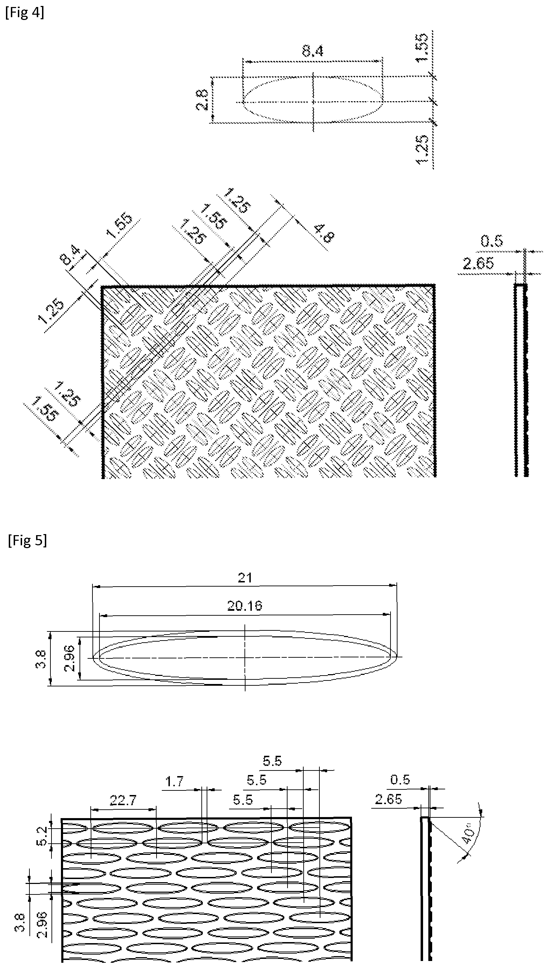

Dans cet exemple, on a caractérisé des tôles selon l'art antérieur en alliage 5086. Ainsi le niveau de bruit d'une tôle ayant un motif de type « grain de riz » selon le brevet FR2747948 a été caractérisée et le résultat obtenu d'intensité vibratoire RMS-Z était de 0,79 g, largement supérieur à celui des tôles selon l'invention. Sa résistance au frottement sur tôle gelées exprimée en Newton était de 229 N. De même une tôle selon la demande de brevet EP2316590 a été caractérisée. Le résultat obtenu d'intensité vibratoire RMS-Z était de 0,62 g, largement supérieur à celui des tôles selon l'invention. Une tôle selon la figure 5, de motif « Gripster » représentative du brevet EP2552612 a été caractérisée le résultat obtenu d'intensité vibratoire RMS-Z était de 0,29 g mais sa résistance au frottement sur tôle gelées exprimée en Newton était de 164 N, bien inférieure à celle des tôles selon l'invention. Cette tôle présente environ 7900 reliefs/m2 dont la surface individuelle était de 71 mm$^2$.

Les pertes d'épaisseur obtenus avec les essais d'abrasion Taber sont données dans le Tableau 2.

[Tableau 2]

| Perte épaisseur (mm) | 400 cycles | 800 cycles | 1200 cycles | 1500 cycles |
|---|---|---|---|---|
| Grain de riz | 0,08 | 0,14 | 0,22 | 0,25 |
| Gripster | 0,04 | 0,06 | 0,07 | 0,08 |

Exemple 3

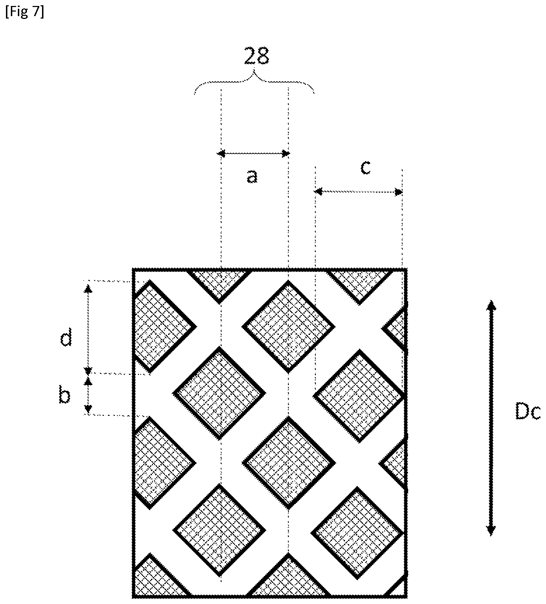

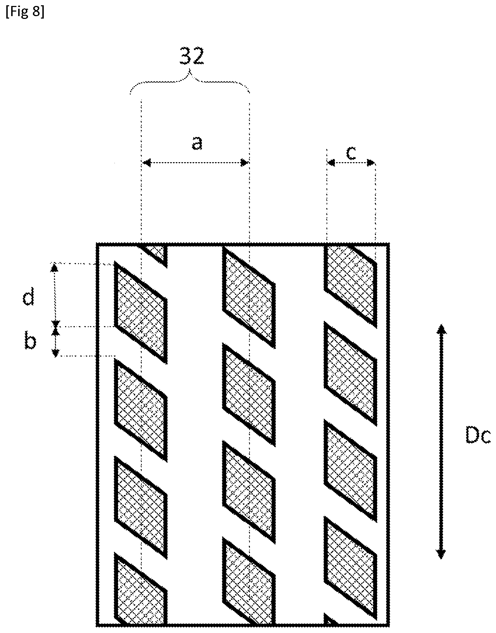

Dans cet exemple on a préparé des tôles selon l'invention par laminage de tôles en alliage AA5086 de dureté 110 HV. Des cylindres gravés rainurés ont été préparés. Un premier cylindre présentait un relief cannelé tel que sur la Figure 9. Un second cylindre présentait un relief en chevrons tel que sur la Figure 10. Deux passes de laminage ont été effectuées avec ces cylindres gravés pour obtenir les motifs décrits à la figure 7, tôle K, et à la figure 8, tôle L. Pour obtenir le motif de la figure 7 on a utilisé deux fois le cylindre au relief chevron en retournant la tôle entre les passes. Pour obtenir le motif de la figure 8 on a été réalisé tout d'abord une passe avec le cylindre au relief cannelé puis une passe avec le cylindre au relief chevron. Grâce à ces laminages successifs, les parois des reliefs obtenus sur les tôles étaient fortement pentues l'angle avec la tôle étant proche de 90°.

Les caractéristiques géométriques et les résultats de résistance au frottement sur tôles gelées, d'intensité vibratoire et de résistance à l'abrasion, mesurées comme dans les exemples 1 et 2, sont présentés dans le Tableau 3. Le motif K a permis d'obtenir une résistance au frottement sur tôles gelées particulièrement élevée.

[Tableau 3]

| Tôle | K | L |
|---|---|---|
| a (mm) | 3,7 | 5,9 |
| b (mm) | 2,8 | 2,5 |
| c (mm) | 4,6 | 2,6 |
| d (mm) | 4,6 | 4,9 |
| Hauteur maximale (H$_{max}$) | 0,6 | 0,6 |
| résistance au frottement sur tôle gelées (N) | 324 | 300 |
| Intensité de la vibratoire RMS-Z (g) | 0.40 | 0,36 |
| Perte d'épaisseur par abrasion (mm) | | |
| 400 Cycles | 0,04 | 0,08 |
| 800 cycles | 0,08 | 0,14 |
| 1200 cycles | 0,14 | 0,21 |
| 1500 cycles | 0,15 | 0,25 |
| Nbre reliefs/m$^2$ en milliers | 36,3 | 22,9 |
| Surface d'un relief (mm2) | 10,6 | 12,7 |

Exemple 4

Dans cet exemple on a mesuré la résistance au frottement sur tôle gelées après un ou deux aller-retour de brosse métallique comme décrit précédemment, pour les tôles Grain de Riz et Gripster de l'exemple 2 et pour les tôles K et L de l'exemple 3.

Les résultats sont donnés dans le Tableau 4.

[Tableau 4]

| résistance au frottement sur tôle gelées (N) | Initial | Après un aller/retour avec brosse métallique | Après deux aller/retour avec brosse métallique |
|---|---|---|---|
| Gripster | 164 | 161 | |
| Grain de Riz | 229 | 189 | 181 |
| K | 324 | 255 | 202 |
| L | 300 | 208 | |

Même après abrasion, les tôles K et L selon l'invention conservent une résistance au frottement sur tôle gelée élevée.

**Revendications**

1. Tôle métallique (10) en alliage d'aluminium pour la réalisation de planchers, en particulier de véhicules industriels, sur lesquels doivent circuler des chariots, ladite tôle présentant sur une face une pluralité de motifs, chaque motif comprenant une ou plusieurs parties saillantes (20), appelées "reliefs", lesdits motifs étant disposés de façon périodique, discrète et ordonnée, la hauteur maximale (Hmax) desdits reliefs étant comprise entre 0,2 et 1,5 mm, lesdits reliefs présentant une surface (30), dite "frottante", qui est définie par l'intersection d'un relief avec un plan (P) parallèle à la surface de la tôle et situé à mi-distance du sommet (21) dudit relief et qui présente, quelle que soit la direction selon laquelle elle est mesurée, une largeur moyenne au moins égale à 0,2 mm, la tôle comprenant au moins 18000 reliefs par mètre carré, lesdits reliefs étant disposés en une pluralité de groupements alignés (26, 28, 32), c'est-à-dire une pluralité de groupements de reliefs dans lesquels les reliefs de chacun desdits groupements alignés présentent la même forme, la même orientation et ont leurs centres de gravité sensiblement alignés selon une même direction donnée (D), la distance minimale mesurée suivant ladite direction donnée (D) entre deux reliefs voisins d'un même groupement aligné étant toujours inférieure à 10 mm, lesdits groupements alignés étant disposés de telle sorte que la distance minimale selon la direction perpendiculaire à la dite direction donnée (D) entre deux reliefs voisins de deux groupements alignés différents est inférieure à 15 mm **caractérisée en ce que** les parois (23) des reliefs font un angle avec la face (11) de la tôle supérieur à 45°.

2. Tôle selon la revendication 1 **caractérisée en ce que** la largeur maximale de la surface frottante desdits reliefs est inférieure à 10 mm et de préférence inférieure à 8 mm quelle que soit la direction selon laquelle elle est mesurée.

3. Tôle selon la revendication 1 ou la revendication 2 **caractérisée en ce que** la superficie de la surface (31), dite "de la base", qui est définie par l'intersection d'un relief avec un plan (P') parallèle à la surface de la tôle et situé à 10% de la hauteur du sommet (21), est comprise entre la superficie de la surface frottante et la superficie de la surface frottante plus 10% et de préférence entre la superficie de la surface frottante et la superficie de la surface frottante plus 5%.

4. Tôle selon une quelconque des revendications 1 à 3 dans laquelle la superficie de la surface frottante des reliefs est inférieure à 20 mm$^2$ et de préférence inférieure à 15 mm$^2$.

5. Tôle selon une quelconque des revendications 1 à 4 dans laquelle la largeur moyenne de la surface « frottante » des reliefs est au plus de de 5 mm, de préférence au plus de 4 mm et de manière préférée au plus de 3 mm quelle que soit la direction selon laquelle elle est mesurée.

6. Tôle selon une quelconque des revendications 1 à 5 dans laquelle les parois (23) des reliefs font un angle avec la face (11) de la tôle supérieur à 60° et préférentiellement supérieur à 70°.

7. Tôle selon une quelconque des revendications 1 à 6 caractérisée en que ladite tôle est en un alliage appartenant au groupe regroupant les alliages d'aluminium des séries 3xxx, 5xxx et 6xxx selon la désignation de l'Aluminum Association ainsi que les alliages de la série 7xxx, comprenant moins de 0,4% Cu.

8. Tôle selon une quelconque des revendications 1 à 7, dont seconde face de la tôle (12) présente une surface rugueuse dont la rugosité $R_{max}$ est comprise entre 10 $\mu$m et 250 $\mu$m.

9. Tôle selon une quelconque des revendications 1 à 8 dont les reliefs ont la forme de parallélogrammes dont les angles sont vifs.

10. Tôle selon une quelconque des revendications 1 à 9 dont les reliefs ont la forme de carrés.

11. Tôle selon une quelconque des revendications 1 à 10 dont la dureté Vickers est au moins 60 HV.

12. Procédé de fabrication d'une tôle selon une des revendications 1 à 11 comprenant, successivement,

   - l'élaboration d'un bain de métal liquide,
   - la coulée dudit alliage typiquement sous forme de plaque de laminage,
   - optionnellement l'homogénéisation du produit ainsi coulé,
   - la déformation par laminage à chaud et optionnellement à froid du produit ainsi obtenu de façon à obtenir une tôle,
   - la réalisation sur une face de la tôle d'une pluralité de motifs, chaque motif comprenant une ou plusieurs parties saillantes (20), appelées "reliefs", par usinage chimique ou par usinage électrochimique ou par usinage mécanique ou par laminage avec au moins un cylindre gravé.

13. Procédé selon la revendication 12 dans lequel la réalisation d'une pluralité de motifs est effectuée par deux passes successives de laminage avec des cylindres gravés rainurés, identiques ou différents.

14. Utilisation d'une tôle selon une quelconque des revendications 1 à 11 pour réaliser un plancher de véhicule frigorifique.


**Patentansprüche**

1. Metallblech (10) aus Aluminiumlegierung zur Fertigung von Böden, insbesondere für Nutzfahrzeuge, auf denen Wagen fahren müssen, wobei das Blech auf einer Seite eine Vielzahl von Mustern aufweist, jedes Muster ein oder mehrere hervorstehende Teile (20) umfasst, die als "Erhebungen" bezeichnet werden, wobei die Muster periodisch, diskret und geordnet angeordnet sind, die maximale Höhe (Hmax) der Erhebungen zwischen 0,2 und 1,5 mm liegt, wobei die Erhebungen eine "reibende" Oberfläche (30) aufweisen, die durch die Schnittstelle einer Erhebung mit einer Ebene (P) definiert ist, die parallel zu der Oberfläche des Blechs verläuft und sich auf halbem Weg vom Scheitelpunkt (21) der Erhebung befindet und die, unabhängig von der Richtung, in der sie gemessen wird, eine durchschnittliche Breite von mindestens 0,2 mm aufweist, wobei das Blech mindestens 18000 Erhebungen pro Quadratmeter umfasst, wobei die Erhebungen in einer Vielzahl von ausgerichteten Gruppen (26, 28, 32) angeordnet sind, das heißt eine Vielzahl von Erhebungsgruppen, in denen die Erhebungen jeder dieser ausgerichteten Gruppen dieselbe Form und Orientierung aufweisen und ihre Schwerpunkte im Wesentlichen entlang derselben gegebenen Richtung (D) ausgerichtet sind, wobei der minimale Abstand, der entlang der gegebenen Richtung (D) zwischen zwei benachbarten Erhebungen derselben ausgerichteten Gruppe gemessen wird, stets weniger als 10 mm beträgt, wobei die ausgerichteten Gruppen so angeordnet sind, dass der minimale Abstand in der Richtung, die senkrecht zu der gegebenen Richtung (D) verläuft, zwischen zwei benachbarten Erhebungen von zwei verschiedenen ausgerichteten Gruppen weniger als 15 mm beträgt, **dadurch gekennzeichnet, dass** die Wände (23) der Erhebungen einen Winkel von mehr als 45° zu der Oberfläche (11) des Blechs bilden.

2. Blech nach Anspruch 1, **dadurch gekennzeichnet, dass** die maximale Breite der reibenden Oberfläche der Erhebungen weniger als 10 mm und vorzugsweise weniger als 8 mm beträgt, unabhängig davon, in welcher Richtung sie gemessen wird.

3. Blech nach Anspruch 1 oder Anspruch 2, **dadurch gekennzeichnet, dass** die Fläche der Oberfläche (31), die als "Basis" bezeichnet wird, die durch den Schnittpunkt einer Erhebung mit einer Ebene (P') definiert ist, die parallel zu der Oberfläche des Blechs verläuft und sich auf 10 % der Höhe des Scheitelpunkts (21) befindet, zwischen der Fläche der reibenden Oberfläche und der Fläche der reibenden Oberfläche plus 10 % und vorzugsweise zwischen der Fläche der reibenden Oberfläche und der Fläche der reibenden Oberfläche plus 5 % liegt.

4. Blech nach einem der Ansprüche 1 bis 3, bei dem die Fläche der reibenden Oberfläche der Erhebungen kleiner ist als 20 mm$^2$ und vorzugsweise kleiner als 15 mm$^2$.

5. Blech nach einem der Ansprüche 1 bis 4, wobei die durchschnittliche Breite der "reibenden" Oberfläche der Erhebungen höchstens 5 mm, vorzugsweise höchstens 4 mm und bevorzugt höchstens 3 mm beträgt, unabhängig davon, in welcher Richtung sie gemessen wird.

6. Blech nach einem der Ansprüche 1 bis 5, wobei die Wände (23) der Erhebungen einen Winkel mit der Fläche (11) des Blechs von mehr als 60° und vorzugsweise mehr als 70° bilden.

7. Blech nach einem der Ansprüche 1 bis 6, **dadurch gekennzeichnet, dass** das Blech aus einer Legierung besteht, die zu der Gruppe der Aluminiumlegierungen der Serien 3xxx, 5xxx und 6xxx nach der Bezeichnung der Aluminium Association sowie zu den Legierungen der Serie 7xxx gehört und weniger als 0,4 % Cu umfasst.

8. Blech nach einem der Ansprüche 1 bis 7, dessen zweite Seite des Blechs (12) eine raue Oberfläche aufweist, deren Rauheit R$_{max}$ zwischen 10 $\mu$m und 250 $\mu$m liegt.

9. Blech nach einem der Ansprüche 1 bis 8, dessen Erhebungen die Form von Parallelogrammen haben, deren Winkel scharf sind.

10. Blech nach einem der Ansprüche 1 bis 9, dessen Erhebungen die Form von Quadraten haben.

11. Blech nach einem der Ansprüche 1 bis 10, dessen Vickers-Härte mindestens 60 HV beträgt.

12. Verfahren zum Herstellen eines Blechs nach einem der Ansprüche 1 bis 11, das nacheinander Folgendes umfasst:

   - die Zubereitung eines flüssigen Metallbades,
   - der Abguss der Legierung, typischerweise in Form einer Walzplatte,
   - optional die Homogenisierung des so gegossenen Produkts,
   - die Verformung durch Warmwalzen und optional durch Kaltwalzen des so erhaltenen Produkts, um ein Blech zu erhalten,
   - die Fertigung auf einer Seite des Blechs einer Vielzahl von Mustern, wobei jedes Muster eine oder mehrere hervorstehende Teile (20) umfasst, die als "Erhebungen" bezeichnet werden, durch chemische Bearbeitung oder elektrochemische Bearbeitung oder mechanische Bearbeitung oder Walzen mit mindestens einer gravierten Walze.

13. Verfahren nach Anspruch 12, wobei die Fertigung einer Vielzahl von Mustern durch zwei aufeinanderfolgende Walzgänge mit genuteten, identischen oder unterschiedlichen Walzen erfolgt.

14. Verwendung eines Blechs nach einem der Ansprüche 1 bis 11 zum Fertigen eines Bodens für ein Kühlfahrzeug.

**Claims**

1. Metal sheet (10) made of aluminium alloy for the production of floors, in particular of industrial vehicles, on which carriages are to circulate, said sheet having a plurality of patterns on one face, each pattern comprising one or more protruding parts (20), called "reliefs", said patterns being disposed in a periodic, discrete, and ordered manner, the maximum height (Hmax) of said reliefs being between 0.2 and 1.5mm, said reliefs having a "friction" surface (30) which is defined by the intersection of a relief with a plane (P) parallel to the surface of the sheet and located halfway to the top (21) of said relief and which has, regardless of the direction in which it is measured, an average width at least equal 0.2mm, the sheet comprising at least 18000 reliefs per square meter, said reliefs being disposed in a plurality of aligned groups (26, 28, 32), that is to say a plurality of groups of reliefs in which the reliefs of each of said aligned groups have the same shape, the same orientation and have their centers of gravity substantially aligned according to the same given direction (D), the minimum distance measured along said given direction (D) between two neighbouring reliefs of the same aligned group always being less than 10mm, said aligned groups being disposed so that the minimum distance in the direction perpendicular to said given direction (D) between two neighbouring reliefs of two different aligned groups is less than 15mm, **characterised in that** the walls (23) of the reliefs form an angle with the face (11) of the sheet greater than 45°.

2. Sheet according to claim 1, **characterised in that** the maximum width of the friction surface of said reliefs is less than 10mm and preferably less than 8mm regardless of the direction in which it is measured.

3. Sheet according to claim 1 or claim 2, **characterised in that** the area of the surface (31), called "of the base", which is defined by the intersection of a relief with a plane (P') parallel to the surface of the sheet and located at 10% of the height of the top (21), is between the area of the friction surface and the area of the friction surface plus 10% and preferably between the area of the friction surface and the area of the friction surface plus 5%.

4. Sheet according to any one of claims 1 to 3, wherein the area of the friction surface of the reliefs is less than 20mm$^2$ and preferably less than 15mm$^2$.

5. Sheet according to any one of claims 1 to 4, wherein the average width of the "friction" surface of the reliefs is at most 5mm, preferably at most 4mm and preferably at most 3mm regardless of the direction in which it is measured.

6. Sheet according to any one of claims 1 to 5, wherein the walls (23) of the reliefs form an angle with the face (11) of the sheet greater than 60° and preferably greater than 70°.

7. Sheet according to any one of claims 1 to 6, **characterised in that** said sheet is made of an alloy belonging to the group encompassing the aluminium alloys of the series 3xxx, 5xxx and 6xxx according to the designation of the Aluminum Association as well as the alloys of the series 7xxx, comprising less than 0.4% Cu.

8. Sheet according to any one of claims 1 to 7, the second face of the sheet (12) of which has a rough surface, the roughness $R_{max}$ of which is between 10$\mu$m and 250um.

9. Sheet according to any one of claims 1 to 8, the reliefs of which are in the shape of parallelograms, the angles of which are non-rounded.

10. Sheet according to any one of claims 1 to 9, the reliefs of which are in the shape of squares.

11. Sheet according to any one of claims 1 to 10, the Vickers hardness of which is at least 60HV.

12. Method for manufacturing a sheet according to one of claims 1 to 11, successively comprising

    - creating a liquid metal bath,
    - casting said alloy typically in the shape of a rolling ingot,
    - optionally homogenising the product thus cast,
    - deforming the product thus obtained by hot and optionally cold rolling so as to obtain a sheet,
    - creating a plurality of patterns on one face of the sheet, each pattern comprising one or more protruding parts (20), called "reliefs", by chemical machining or by electrochemical machining or by mechanical machining or by rolling with at least one embossed roll.

13. Method according to claim 12, wherein the creation of a plurality of patterns is carried out by two successive rolling passes with identical or different grooved, embossed rolls.

14. Use of a sheet according to any one of claims 1 to 11 to create a floor of a refrigerated vehicle.

[Fig. 1a]

[Fig 1b]

[Fig 1c]

[Fig 2]

[Fig 3]

[Fig 4]

[Fig 5]

[Fig 6]

26

[Fig 7]

[Fig 8]

[Fig 9]

[Fig 10]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2747948
- EP 2316590 A1
- EP 2552612 B1
- DE 9409026 U1
- EP 0438031 B1
- JP H01275036 B
- US 11198163 B
- AT 512773 A4
- WO 2011121191 A
- FR 2747948 A
- EP 2316590 A
- EP 2552612 A